# NEW EUROPEAN PATENT SPECIFICATION

(11) **EP 2 155 582 B2**
(45) Date of publication and mention of the opposition decision: **03.10.2018**
(45) Mention of the grant of the patent: 29.07.2015
(21) Application number: 08750084.9
(22) Date of filing: 06.05.2008
(51) Int. Cl.: B65D 81/26, B01D 53/26

(54) **CONTAINER WITH MOISTURE CONTROL CAPACITY**
BEHÄLTER MIT FEUCHTIGKEITSREGELUNG
RÉCIPIENT À CAPACITÉ DE RÉGULATION DE L'HUMIDITÉ

(30) Priority: 07.05.2007 US 916374 P
(43) Date of publication of application: 24.02.2010
(73) Proprietor: Clariant Production (France) S.A.S., 60350 Trosly Breuil (FR)
(72) Inventor: PORTIER, Benoit, F-18000 Bourges (FR); BENOIS, Florence, F-94100 Saint-Maur-des-Fosses (FR)
(74) Representative: Silber, Anton
(86) International application number: PCT/EP2008/055532
(87) International publication number: WO 2008/135570

(56) References cited:
- EP-A2- 0 100 653
- EP-A2- 1 640 324
- WO-A-2004/080808
- WO-A1-99/63288
- WO-A1-2005/040304
- US-A- 4 548 734
- US-A- 5 686 161
- US-A- 6 103 141
- US-A1- 2004 106 721
- US-A1- 2004 122 175
- US-A1- 2005 124 758
- US-A1- 2006 097 223
- US-A1- 2006 144 733
- US-A1- 2006 166 819
- US-B1- 6 281 407
- US-B1- 6 451 423
- US-B1- 6 540 937
- US-B1- 6 613 405

## Description

### Background of Invention

The present invention relates to multifunctional vessels, such as pharmaceutical or nutraceutical vessels, containing a moisture control material which may be placed within, secured within or form a portion of the multifunctional vessel.

The invention relates to vessels for holding commercial products wherein the relative humidity level within the vessel can be regulated.

There are many products which are enhanced by the maintenance of predetermined levels of relative humidity within containers for those products. These products may include pharmaceutical products, such as dry powder inhalers (DPI) and soft gel tablets and various other consumer products.

US 6,613,405 discloses a monolithic polymer that is capable of maintaining a substantially constant relative humidity in the package comprising a water-insoluble polymer and a deliquescent material. Said deliquescent material can be preloaded with a specific hydrate level.

WO 2004/080808 A1 discloses a moisture control material comprising a polymeric material such as a polyolefinic material and a desiccant material such as molecular sieves and/or clays or hydrate-forming salts.

US 2004/122175 A1 discloses a composition comprising a polymer and a particulate material which can be a material releasing humidifying substances to surrounding atmosphere.

It is an object of the invention to prepare a vessel for holding products which contains a moisture control material, wherein the relative humidity level within the vessel can be regulated.

This object and other objects are obtained by the use of the combination disclosed herein.

### Summary of the Invention

The present invention provides the use of a combination of a first and a second moisture control material according to claim 1.

An embodiment includes the use of a combination of moisture control materials, wherein the first moisture control material comprises a blend of from 20 to 85% by weight of the plastic material and 15 to 80% by weight of the first moisture control substance.

A further embodiment includes the use of a combination of moisture control materials, wherein the first moisture control substance in the first moisture control material is layered within a gradient within the blend of the plastic material and the first moisture control substance is located near a surface thereof.

The invention provides also a multifunctional vessel for holding commercial products according to claim 4.

### Detailed Description of the Invention

One embodiment of the invention comprises a multifunctional vessel useful for holding a variety of commercial products, such as pharmaceuticals, such as DPI and soft gel tablets, nutraceuticals, food and other commercial products, which vessel contains at least a moisture control material, which is at least partially produced from a blend of a plastic material and at least one moisture control substance, which is secured within or forms a portion of the multifunctional vessel, wherein the moisture control substance is partially or fully hydrated before or preferably after formation of the moisture control material.

In another embodiment the multifunctional vessel comprises a conventional container manufactured from conventional materials, such as plastic or glass. Placed within this container is the moisture control material. The moisture control material is formed from a plastic material blended with a moisture control substance, selected from silica gel, bentonite clay, montmorillonite clay, or mixtures thereof, wherein the moisture control substance is partially or fully hydrated before or preferably after formation of the moisture control material.

Among the plastic materials that can be utilized is a single thermoplastic material that is compatible with the products which are placed within the vessel and which can be easily blended with the moisture control substance. The plastic materials may be selected from a thermoplastic material, such as, but not limited to, polystyrenes, polyolefins, polyethylene, polypropylene, polyacrylates, polymethacrylates, polyamides, polyesters, and polyvinyl chloride. Non-limiting examples of copolymers include; styrene-butadiene rubbers (SBR), styrene-ethylene-butadiene-styrene copolymers (SEBS), butyl rubbers, ethylene-propylene rubbers (EPR), ethylene-propylene-diene monomer rubbers (EPDM), ethylene-vinyl acetate copolymers (EVA), ethylene-acrylate or butadiene-acrylonitrile, maleic anhydride modified polymers and copolymer, and grafted copolymers. In one preferred embodiment, the plastic material is polypropylene, polyethylene or polystyrene, preferably a high density polyethylene.

In another preferred embodiment, an inner layer of the multifunctional vessel or a separate insert for placement within a vessel can be produced solely or partially from a moisture control material, which comprises more than one thermoplastic material and at least one moisture control substance, selected from silica gel bentonite clay, montmorillonite clay, or mixtures thereof, wherein the moisture control substance is partially or fully hydrated before or preferably following formation of the inner layer or separate insert, and wherein the moisture control material controls the level of relative humidity within the vessel. The thermoplastic materials can be any materials that exhibit thermoplastic properties, including but not limited to, a copolymer of two or more monomers, a mixture of two or more polymers from single monomers, a mixture of two or more copolymers and a mixture of at least one polymer from a single monomer and at least one copolymer. Non-limiting examples of polymers from single monomers include: polystyrenes, polyolefins, polyethylene, polypropylene, polyacrylates, polymethacrylates, polyamides, polyesters, and polyvinyl chloride. Non-limiting examples of copolymers include: styrenebutadiene rubbers (SBR), styrene-ethylene-butadienestyrene copolymers (SEBS), butyl rubbers, ethylene-propylene rubbers (EPR), ethylene-propylene-diene monomer rubbers (EPOM), ethylene-vinyl acetate copolymers (EVA), ethylene-acrylate or butadiene-acrylonitrile, maleic anhydride modified polymers and copolymers,and grafted copolymers.

When blends of thermoplastic materials are combined with the moisture control substance to form the moisture control material, it has been observed that one of the components of the thermoplastic blends tends to enrich at the surface together with the moisture control substance while the other component tends to enrich towards the center of the composition. However, it has been discovered that only in the melted state does the moisture control substance tend to migrate towards the surface of the composition. Care must be taken to prepare such articles so that the moisture control substance and the thermoplastic material exhibit the separation described hereinafter while in the molten or flowable state. For example, the thermoplastic material may be prepared from a blend of linear low density polyethylene (LLDPE), low density polyethylene (LDPE) and ethylene vinyl acetate (EVA) copolymer, wherein each of the components include an ethylene monomeric unit. "Separation" as used herein defines a concentration gradient difference and does not necessarily mean 100% separation of the components into distinct phases. Similarly, "layered" as used herein means a significant change in concentration gradient such that the product appears to be layered, and does not necessarily mean a layer of one component and a second layer of a different component. "Gradient" means that the concentration of the moisture control substance varies with distance from the surface of a product manufactured from the moisture control material.

In order to achieve this phase separation, it has been found preferable to use as a thermoplastic component a blend of at least one polymer derived from a single monomer with at least one copolymer. Preferably the copolymer contains the monomer of the single monomer component so that the two polymers are compatible. If two or more copolymers are mixed to form the thermoplastic material, they should preferably contain at least one common monomer.

The moisture control substance includes known materials which can be partially or fully hydrated, selected from silica gel, bentonite clay, montmorillonite clay, and mixtures thereof. The purpose of the moisture control substance is to control the relative humidity within the vessel in which the moisture control material is placed. After hydration of the moisture control substance, the relative humidity is controlled by the moisture control substance absorbing excess moisture from the vessel when the moisture level within the vessel exceeds the desired level and/or promoting the retention of moisture inside the vessel by adding moisture to the vessel if the moisture level inside the vessel falls below the desired level.

Preferably, the air inside the multifunctional vessel is set at a desired relative humidity level at the time the moisture control material is placed within the vessel and the vessel is sealed. As the contents within the vessel are used, the relative humidity level may change depending on many factors, including how many times the vessel is opened and closed, the amount of moisture that leaks through the lid of the vessel, the permeability of the material of the vessel and the relative humidity level outside of the vessel.

The manufacturer of the vessel can control the level of the relative humidity within the vessel by the choice and quantity of the moisture control substance, choice of the plastic material and by the level of hydration of the moisture control substance after formation of the final product. According to the invention a plastic material that contains a moisture control substance that has not been hydrated is included within the vessel as a separate component, or as a component of the vessel itself.

A preferred range of relative humidity for the moisture control material is between 5% relative humidity and 40% relative humidity. When the products placed within the vessel are pharmaceutical products, the relative humidity may be as low as 5%. However, when certain commercial products are present within the vessel, the relative humidity may need to be as high as 40%. However, in a preferred range the relative humidity is between 5% relative humidity and 25% relative humidity.

In order for the moisture control material to maintain the relative humidity at the desired level within the vessel, it is necessary that the moisture control substance that is introduced into the plastic material be sufficiently hydrated before or preferably after formation of the moisture control material so that it maintains the predetermined level of relative humidity of the atmosphere within the vessel that is desired. In addition, it is necessary that there be a sufficient quantity of the moisture control substance with the appropriate hydration present within the moisture control material to maintain the desired relative humidity within the vessel.

The moisture control substance comprises silica gel, bentonite clay, montmorillonite clay, or mixtures thereof, which is hydrated to the desired level before, or preferably after formation of the product that contains both the moisture control substance and the plastic composition. One method of hydrating the moisture control material containing the plastic composition and the moisture control substance after its formation is by placing the final product made from the blended material in a controlled or regulated humidity environment, such as a sealed room or oven, where the humidity of the environment is regulated within a desired relative humidity range or ranges. The moisture control material should be left in the controlled or regulated humidity environment long enough for the moisture control substance to become sufficiently hydrated. After the moisture control material is removed from the controlled or regulated humidity environment, the moisture content of the moisture control substance can be measured or tested by well known mechanisms and instruments, such as a hygrometer, balance, desiccant balance or moisture analyzer to ensure that it has been sufficiently hydrated.

Other methods can also be used to hydrate the moisture control substance before or preferably after it has been blended with the plastic composition to form the final product, which methods are known in the industry.

Once the humidity level of the moisture control substance has been determined, that humidity level may be decreased by drying the moisture control substance or increased by placing it for an additional period of time within the controlled or regulated humidity environment.

The moisture control substance comprises silica gel, bentonite clay, montmorillonite clay, or mixtures thereof. Silica gel is a porous, granular, chemically inert, amorphous form of silicon dioxide which is capable of absorbing and desorbing water vapor in order to reach equilibrium with the surrounding environment. Silica gel has a long life span and continues to absorb or desorb moisture for an extended period of time. The particular type of silica gel that is selected can be determined by the person skilled in the art reviewing the particular desired environment of the vessel.

If desired, other functionalities can be provided for the vessel, such as by adding a material for absorbing various gases, such as oxygen.

A scent may also be incorporated into the plastic material of the moisture control material, if desired, or a scent can be incorporated into the composition of a separate insert placed within the vessel. All of these improvements to the multifunctional vessel assist in the preservation and maintenance of the materials present in the vessel.

The relative concentration of thermoplastic material to the moisture control substance may vary depending on the thermoplastic material and the moisture control substance used. In a preferred embodiment, the polymeric structure comprises from 20 wt.-% to 85 wt.-% thermoplastic material and from 15 wt.-% to 80 wt.-% moisture control substance.

Where applicable, compositions of the moisture control material further include appropriate quantities, up to 10 percent, of organic or inorganic additives that are useful in the field of plastic such as plasticizers, stabilizers, elastomers, dyes and pigments. The composition may be customized to include certain pigments and/or colorants. It is often desirable that the manufactured article have a particular color. A particular color may, for example, enhance aesthetic appeal of the article and may serve to identify the particular brand or manufacturer. Suitable pigments of black, white or colored pigments, as well as extenders may be used. Examples of useful pigments include, without limitation, titanium oxide, zinc oxide, zinc sulfide, barium sulfate, aluminum silicate, calcium silicate, carbon black, black iron oxide, copper chromite black, yellow iron oxides, red iron oxides, brown iron oxides, ocher, sienna, umber, hematite, limonite, mixed iron oxide, chromium oxide, Prussian blue chrome green, chrome yellow, manganese violet and other well known pigments. Dyes may be employed instead of pigments or in addition to the pigments.

Surprisingly, it has been found that products formed from the moisture control material exhibiting an accumulation of partially or fully hydrated moisture control substance in a "migration zone" in a gradient towards the surface show distinct advantages in preserving a predetermined humidity level compared to structures that contain the same concentration of moisture control substance throughout the product (monolithic structures) and structures that contain the moisture control substance only at the surface.

The polymeric structure of the moisture control material is produced by forming and setting the thermoplastic material after it has been dosed with the moisture control substance. The polymeric structure may be produced by common plastic manufacturing processes, such as extrusion, co-extrusion, injection molding, bi-injection molding, blow molding, and any other methods that involve melting the thermoplastic material to an essentially viscous state. For example, the polymeric structure may be produced by the steps of heating the selected thermoplastic material (or combination of materials) until the thermoplastic material is viscous, adding the selected moisture control substance, blending the moisture control substance into the melted thermoplastic, extruding the thermoplastic-moisture control substance blend, and cooling the thermoplastic-moisture control substance blend. The polymeric structure can then be cut or ground or processed by other means known in the art.

The composition of this embodiment is prepared such that the moisture control substance tends to concentrate in a gradient within the migration zone near the surface of the polymeric composition. In a preferred embodiment, the concentration of the moisture control substance at the surface creates distinct layers of the composition, which are identifiable, i.e., a surface layer that is enriched in the moisture control substance and an interior layer that is depleted of that same moisture control substance. After formation of this embodiment, the moisture control substance, concentrated within the gradient within the migration zone near the surface of the polymeric composition, is hydrated as previously discussed.

The present invention provides a multifunctional vessel containing not only a moisture control material with a moisture control substance which has been hydrated to a predetermined moisture level, but, a plastic material that contains a moisture control substance that is not hydrated, wherein the combination of these materials results in a predetermined relative humidity level within the vessel. For example, in one particularly preferred embodiment, the composition of the container itself may be partially comprised of a plastic material that contains a moisture control material which has not been hydrated, preferably an inner layer formed by injection molding. A moisture control material in the form of an insert comprised of a moisture control substance and a plastic material blended together, wherein the moisture control substance is hydrated after formation of the insert, is placed within the vessel. The combination of the plastic material that contains a nonhydrated moisture control substance and a moisture control material comprising a moisture control substance and a plastic material that is hydrated after formation when used in combination results in the formation of an environment with a relative humidity level between zero percent and the level of relative humidity that would be created by the moisture control substance, if fully hydrated.

By use of this combination of materials and by modifying the level of hydration of the moisture control substance within the moisture control material, precise levels of relative humidity can be maintained within the multifunctional vessel.

Other modifications to the composition and hydration of the materials that are placed within the vessel are within the scope of preferred embodiment of the invention. In addition, materials with other functionalities, such as materials for absorbing various gases, such as oxygen, or materials that provide a scent within the vessel may be incorporated into the vessel and are also within the scope of the preferred embodiments of the invention. In one preferred embodiment an oxygen absorbing canister or sachet is also placed within the multifunctional vessel.

It will be apparent from the forgoing that while particular forms of the invention have been illustrated various modifications can be made without departing from the scope of the invention. Accordingly, the invention is not intended to be limited by the specification of the application.

## Claims

1. Use of a combination of a first and a second moisture control material contained in a multifunctional vessel,
the first moisture control material comprising a blend of a plastic material and a first moisture control substance that is hydrated to a predetermined level,
wherein the first moisture control substance is selected from the group consisting of silica gel, bentonite clay, montmorillonite clay, and mixtures thereof,
the second moisture control material comprising a blend of a plastic material and a second moisture control substance that is not hydrated,
for maintaining relative humidity level within the multifunctional vessel.

2. The use of Claim 1 wherein the first moisture control material comprises a blend of from 20 to 85% by weight of the plastic material and 15 to 80% by weight of the first moisture control substance.

3. The use of Claim 1 or claim 2, wherein the first moisture control substance in the first moisture control material is layered within a gradient within the blend of the plastic material and the first moisture control substance is located near a surface thereof.

4. A multifunctional vessel for holding commercial products comprising a vessel and a combination of moisture control materials as defined in any of claims 1 to 3 placed or secured within the vessel.

5. The multifunctional vessel of claim 4, wherein the first moisture control material is comprised in an inner layer of the multifunctional vessel or a separate insert placed within the vessel.

6. The multifunctional vessel of Claim 4 further comprising an oxygen absorber.

## Patentansprüche

1. Verwendung einer Kombination aus einem ersten und einem zweiten Feuchteregulierungsmaterial, die in einem Multifunktionsgefäß enthalten ist,
wobei das erste Feuchteregulierungsmaterial ein Gemisch aus einem Kunststoffmaterial und einem ersten Feuchteregulierungsstoff, der auf ein vorbestimmtes Niveau hydratisiert ist, umfasst, wobei der erste Feuchteregulierungsstoff ausgewählt ist aus der Gruppe bestehend aus Silicagel, Bentonit-Ton, Montmorillonit-Ton und Gemischen davon,
und das zweite Feuchteregulierungsmaterial ein Gemisch aus einem Kunststoffmaterial und einem zweiten Feuchteregulierungsstoff, der nicht hydratisiert ist, umfasst,
zum Aufrechterhalten des Niveaus relativer Feuchte innerhalb des Multifunktionsgefäßes.

2. Verwendung gemäß Anspruch 1, wobei das erste Feuchteregulierungsmaterial ein Gemisch aus 20 bis 85 Gew.-% an dem Kunststoffmaterial und 15 bis 80 Gew.-% an dem ersten Feuchteregulierungsstoff umfasst.

3. Verwendung gemäß Anspruch 1 oder Anspruch 2, wobei der erste Feuchteregulierungsstoff in dem ersten Feuchteregulierungsmaterial mit einem Gradienten innerhalb des Gemischs des Kunststoffmaterials geschichtet ist und der erste Feuchteregulierungsstoff nahe einer Oberfläche davon angeordnet ist.

4. Multifunktionsgefäß zum Beinhalten gewerblicher Produkte, umfassend ein Gefäß und eine wie in einem der Ansprüche 1 bis 3 definierte Kombination von Feuchteregulierungsmaterialien, die in dem Gefäß angeordnet oder befestigt ist.

5. Multifunktionsgefäß gemäß Anspruch 4, wobei das erste Feuchteregulierungsmaterial in einer inneren Schicht des Multifunktionsgefäßes oder einem gesonderten, innerhalb des Gefäßes angeordneten Einsatz enthalten ist.

6. Multifunktionsgefäß gemäß Anspruch 4, ferner umfassend einen Sauerstoffabsorber.

## Revendications

1. Utilisation d'une combinaison d'un premier matériau de régulation de l'humidité et d'un deuxième matériau de régulation de l'humidité contenus dans un récipient multifonctionnel,
le premier matériau de régulation de l'humidité comprenant un mélange d'une matière plastique et d'une première substance de régulation de l'humidité qui est hydratée jusqu'à un niveau prédéterminé,
la première substance de régulation de l'humidité étant sélectionnée dans le groupe constitué d'un gel de silice, de l'argile bentonite, de l'argile montmorillonite, et de mélanges de ceux-ci,
le deuxième matériau de régulation de l'humidité comprenant un mélange d'une matière plastique et d'une deuxième substance de régulation de l'humidité qui n'est pas hydratée,
pour maintenir le niveau d'humidité à l'intérieur du récipient multifonctionnel.

2. Utilisation selon la revendication 1, dans laquelle le premier matériau de régulation de l'humidité comprend un mélange de 20 % à 85 % en poids de la matière plastique et de 15 % à 80 % en poids de la première substance de régulation de l'humidité.

3. Utilisation selon la revendication 1 ou la revendication 2, dans laquelle la première substance de régulation de l'humidité dans le premier matériau de régulation de l'humidité est stratifiée selon un gradient dans le mélange de la matière plastique et la première substance de régulation de l'humidité se situe près d'une surface de celui-ci.

4. Récipient multifonctionnel destiné à contenir des produits commerciaux, comprenant un récipient et une combinaison de matériaux de régulation de l'humidité tels que définis dans l'une quelconque des revendications 1 à 3, mis ou bloqués en place à l'intérieur du récipient.

5. Récipient multifonctionnel selon la revendication 4, dans lequel le premier matériau de régulation de l'humidité est présent dans une couche intérieure du récipient multifonctionnel ou dans une pièce rapportée séparée mise en place à l'intérieur du récipient.

6. Récipient multifonctionnel selon la revendication 4, comprenant en outre un absorbeur d'oxygène.
